Europäisches Patentamt

European Patent Office

Office européen des brevets

(19)

(11) Veröffentlichungsnummer : **0 133 458**
**B1**

(12) **EUROPÄISCHE PATENTSCHRIFT**

(45) Veröffentlichungstag der Patentschrift :
09.09.87

(51) Int. Cl.⁴ : **B 60 K 15/02**

(21) Anmeldenummer : **84106047.8**

(22) Anmeldetag : **28.05.84**

(54) **Kraftstoffbehälter für Kraftfahrzeuge.**

(30) Priorität : **06.07.83 DE 3324329**

(43) Veröffentlichungstag der Anmeldung :
**27.02.85 Patentblatt 85/09**

(45) Bekanntmachung des Hinweises auf die Patenterteilung : **09.09.87 Patentblatt 87/37**

(84) Benannte Vertragsstaaten :
**DE FR GB IT SE**

(56) Entgegenhaltungen :
**EP-A- 0 070 999**
**DE-A- 3 213 070**
**DE-B- 1 176 011**
**DE-B- 2 752 645**
**DE-U- 8 226 711**
**US-A- 2 172 836**

(73) Patentinhaber : **Dr.Ing.h.c. F. Porsche Aktiengesells-chaft**
**Porschestrasse 42**
**D-7000 Stuttgart 40 (DE)**

(72) Erfinder : **Anhegger, Sigmund**
**Keltenstrasse 10**
**D-7253 Renningen (DE)**

**Beschreibung**

Die Erfindung bezieht sich auf einen Kraftstoffbehälter für Kraftfahrzeuge mit einem Ausgleichsraum gemäß dem Oberbegriff des Anspruchs 1.

Aus der DE-B-2 752 645 ist ein Kraftstoffbehälter mit einem Ausgleichsraum dieser Art bekannt. Ferner ist aus der DE-B-1 176 011 ein aus einem Oberteil und einem Unterteil zusammengesetzter Kraftstoffbehälter aus Blech bekannt, der im Bereich seines Oberteiles einen kammerartigen Ausgleichsraum aufweist, der durch Wandungen des Oberteils und ein mit diesen Wandungen verbundenes wannenförmiges Blechteil gebildet wird. Dieser Anordnung haftet der Nachteil an, daß zur Herstellung des Kraftstoffbehälters und des Ausgleichsraumes aufwendige Löt- bzw. Schweißarbeiten und nachfolgende Funktionskontrollmaßnahmen erforderlich sind, da einerseits die Verbindungsstellen zwischen Oberteil und Unterteil und andererseits zwischen Oberteil und wannenförmigem Blechteil luftdicht ausgebildet sein müssen. Hierdurch entstehend hohe Herstellungskosten.

Aufgabe der Erfindung ist es, einen kostengünstig herstellbaren Kraftstoffbehälter mit einem Ausgleichsraum zu schaffen, wobei der Ausgleichsraum eine sichere Füllbegrenzung beim Betanken (auch bei Schräglage) gewährleistet.

Erfindungsgemäß wird diese Aufgabe durch die kennzeichnenden Merkmale des Anspruchs 1 gelöst. Weitere, die Erfindung weiterbildenden Merkmale sind in den Unteransprüchen enthalten.

Die mit der Erfindung hauptsächlich erzielten Vorteile sind darin zu sehen, daß durch die einstückige Ausbildung des Kraftstoffbehälters und des Ausgleichsraumes aufwendige Abdichtmaßnahmen und nachfolgende Maßnahmen zur Funktionskontrolle entfallen. Darüber hinaus ist der im Blasverfahren aus einem geeigneten Kunststoff gefertigte Kraftstoffbehälter mit integriertem Ausgleichsraum kostengünstig herstellbar und weist ein geringes Gewicht auf. Befestigungselemente zur Halterung des Ausgleichsraumes sind nicht erforderlich. Ferner bewirken die aus der Ebene A-A in den Behälterinnenraum gerichteten V-förmig oder U-förmig ausgebildeten Einbuchtungen eine Versteifung des Kraftstoffbehälters.

Ein Ausführungsbeispiel der Erfindung wird nachfolgend anhand von Zeichnungen näher erläutert.

Es zeigt

Figur 1 eine perspektivische Ansicht von oben auf einen Kraftstoffbehälter mit dem Ausgleichsraum nach der Erfindung,

Figur 2 einen Schnitt nach der Linie II-II der Fig. 1,

Figur 3 einen Schnitt nach der Linie III-III der Fig. 1, um 90° gedreht,

Figur 4 einen Schnitt nach der Linie IV-IV der Fig. 1 in größerem Maßstab.

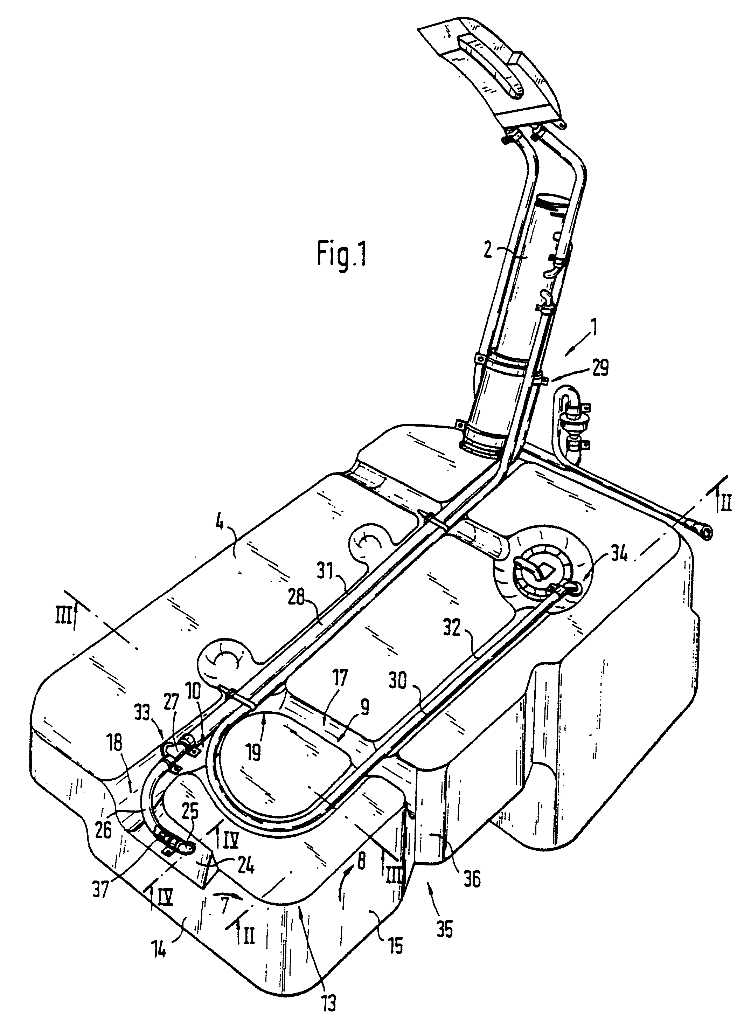

Der in Fig. 1 dargestellte Kraftstoffbehälter 1 für ein Kraftfahrzeug weist einen Einfüllstutzen 2 auf, der an seinem freien Ende mit einer nicht näher dargestellten Verschlußvorrichtung versehen ist.

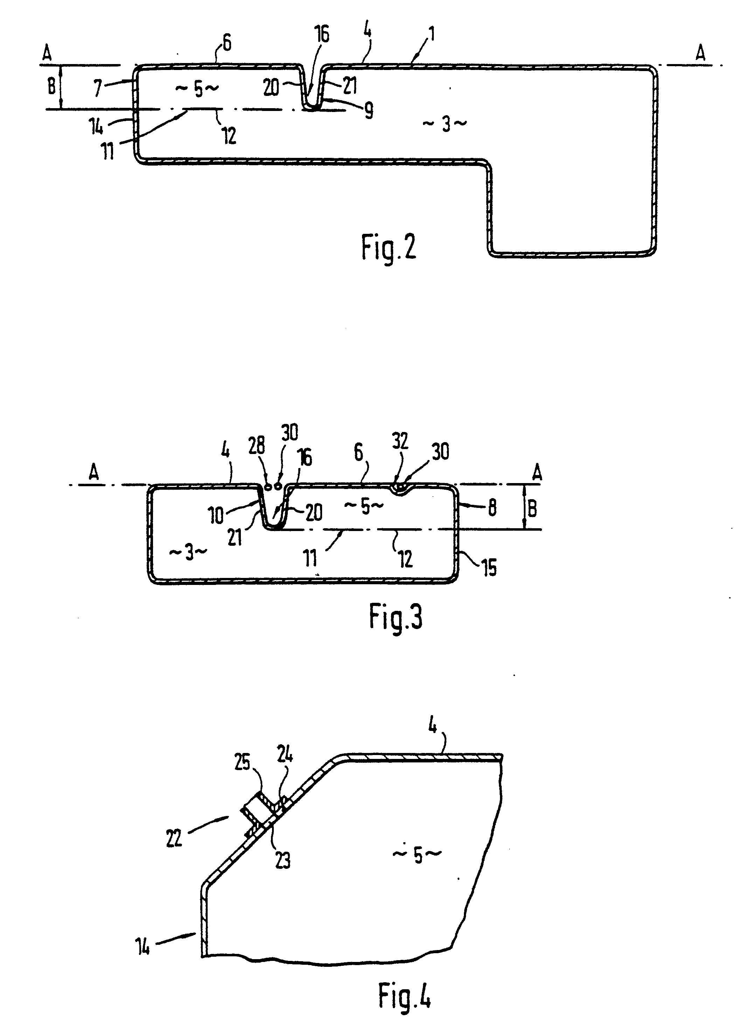

Zur Füllbegrenzung beim Betanken ist im Behälterinnenraum 3 unterhalb einer oberen Kraftstoffbehälterwand 4 ein Ausgleichsraum 5 vorgesehen, dessen Volumen etwa 10 % des gesamten Behältervolumens beträgt (Fig. 2 und 3). Der Kraftstoffbehälter 1 und der Ausgleichsraum 5 bestehen aus einem Stück und sind aus einem Kunststoff wie Hochdruck-Polyäthylen oder dergleichen im Blasverfahren hergestellt.

Der Ausgleichsraum 5 setzt sich aus einer in einer etwa horizontal verlaufenden Ebene A-A liegenden oberen Begrenzungswand 6 und aufrechten Wandabschnitten 7, 8, 9, 10 zusammen. Die Wandabschnitte 7, 8, 9, 10 erstrecken sich von der oberen Kraftstoffbehälterwand bzw. der oberen Begrenzungswand 6 nach unten und bilden zusammen mit dieser eine seitlich gegenüber dem angrenzenden Behälterinnenraum 3 geschlossene und nach unten hin offene Kammer, wobei die offene Unterseite 11 eine Einlaßöffnung 12 des Ausgleichsraumes 5 darstellt (Fig. 2 und 3).

Bei dem in Fig. 1 gezeigten Kraftstoffbehälter 1 ist der Ausgleichsraum 5 auf der dem Einfüllstutzen 2 gegenüberliegenden Seite angeordnet, und zwar in einem Eckbereich 13 des Kraftstoffbehälters 1. Bei dieser — in der Draufsicht gesehen — etwa quadratischen Gestaltung des Ausgleichsraumes 5 werden die Wandabschnitte 7 und 8 durch obenliegende Bereiche der außenliegenden Seitenwände 14, 15 gebildet, wobei sich die Seitenwand 14 in Fahrzeuglängsrichtung und die Seitenwand 15 in Fahrzeugquerrichtung erstreckt.

Die Wandabschnitte 9 und 10 werden hingegen durch nach unten hin gerichtete Einbuchtungen 16 der oberen Kraftstoffbehälterwand 4 bzw. der oberen Begrenzungswand 6 gebildet; hierbei erstreckt sich ein Abschnitt 17 in Fahrzeuglängsrichtung und der anschließende Abschnitt 18 in Fahrzeugquerrichtung, wobei zwischen den beiden Abschnitten 17, 18 der Einbuchtung 16 ein gerundeter Übergangsbereich 19 vorgesehen ist.

Die Einbuchtung 16 ist — im Querschnitt gesehen — U-förmig oder V-förmig ausgebildet (Fig. 2 und 3) und stellt zusätzlich ein Versteifungselement für den Kraftstoffbehälter 1 dar. Aus Herstellungsgründen sind die beiden Schenkel 20, 21 der Einbuchtung 16 gegenüber einer Vertikalen leicht geneigt (Ausformschräge).

Es besteht jedoch auch die Möglichkeit, daß der Ausgleichsraum 5, außer in einem Eckbereich 13, in einem Randbereich oder in einem mittleren Bereich des Kraftstoffbehälters 1 vorgesehen ist (nicht dargestellt). Die Form des Ausgleichsraumes 5 kann — in der Draufsicht gesehen — rechteckig, quadratisch, dreieckig, kreisförmig, oval oder dergleichen ausgebildet sein.

Um eine gute Funktion des Ausgleichsraumes 5 beim Betanken zu gewährleisten, (insbesondere bei Schräglage des Fahrzeuges), sollte sich die die Höhe des Ausgleichsraumes 5 bestimmende Einbuchtung 16 möglichst weit von der oberen Kraftstoffbehälterwand 4 nach unten erstrecken (Maß B).

Außerdem ist in einem obenliegenden Abschnitt 22 des Ausgleichsraumes 5 eine Auslaßöffnung 23 vorgesehen, die im Vergleich zur Einlaßöffnung 12 einen verhältnismäßig kleinen Querschnitt aufweist, so daß die verdrängte Luft nur sehr langsam aus dem Ausgleichsraum 5 entweichen kann (Fig. 1 und 4). Die Auslaßöffnung 23 ist an einer lediglich in einem Teilbereich ausgebildeten Abschrägung 24 zwischen der oberen Kraftstoffbehälterwand 4 und der aufrechten Seitenwand 14 vorgesehen.

An der Außenseite des Kraftstoffbehälters 1 ist im Bereich der Auslaßöffnung 23 ein durch Reibschweißen befestigter Anschlußstutzen 25 angebracht, der eine abgewinkelte Form aufweist. An das freie Ende des Anschlußstutzens 25 ist eine Leitung 26 angeschlossen, die über einen weiteren, T-förmigen Anschlußstutzen 27 mit dem benachbarten Behälterinnenraum 3 und mit einer Entlüftungsleitung 28 einer Entlüftungsvorrichtung 29 verbunden ist. Die Leitung 26 weist — von oben gesehen — einen gebogenen Formverlauf auf.

Der T-förmige Anschlußstutzen 27 ist ebenfalls an der Außenseite des Kraftstoffbehälters 1 durch Reibschweißen befestigt und zwar am Schenkel 21 in einem mittleren Bereich des Abschnittes 18 der Einbuchtung 16. Der Anschlußstutzen 27 und die Leitung 26 sind so angeordnet, daß sie sich unterhalb der horizontal verlaufenden Ebene A-A befinden (Fig. 3).

Darüber hinaus sind an der oberen Kraftstoffbehälterwand 4 gegebenenfalls weitere Einbuchtungen 31, 32 zur versenkten Anordnung der außenliegenden Entlüftungsleitungen 28 und 30 vorgesehen. Diese Einbuchtungen 31, 32 weisen jedoch eine wesentlich geringere Tiefe auf als die Einbuchtung 16 des Ausgleichsraumes 5 (Fig. 3).

Die Entlüftungsleitungen 28 und 30 der Entlüftungsvorrichtung 29 münden beide in den Einfüllstutzen 2 und sind an gegenüberliegende Seiten 33, 34 an den Kraftstoffbehälter 1 angeschlossen. Hierbei weist die Entlüftungsleitung 30 — von oben gesehen — einen etwa U-förmigen Formverlauf auf.

Gemäß Fig. 1 ist an der in Querrichtung verlaufenden Seitenwand 15 bei 35 eine Einprägung 36 angebracht, an der nicht näher gezeigte Spannbänder zur Befestigung des Kraftstoffbehälters 1 in Lage gehalten sind. Die Einprägung 36 verläuft in vertikaler Fortsetzung des Abschnittes 17.

Im Ausführungsbeispiel weisen die Leitungen 26 und die Entlüftungsleitung 28 den gleichen Innendurchmesser auf. Damit die Luft nur sehr langsam aus dem Ausgleichsraum 5 entweichen kann, ist in die Leitung 26 ein querschnittsverringerndes Reduzierstück 37 eingesetzt. Es besteht aber auch die Möglichkeit, anstelle des Reduzierstücks 37 eine Leitung 26 zu verwenden, wobei der Innendurchmesser der Leitung 26 dem Durchflußquerschnitt des Reduzierstücks 37 entspricht.

## Patentansprüche

1. Kraftstoffbehälter (1) für Kraftfahrzeuge, der in einem oberen Bereich einen einstückig mit dem Kraftstoffbehälter (1) ausgebildeten Ausgleichsraum (5) zur Füllbegrenzung beim Betanken aufweist, wobei der durch eine nach unten hin offene Kammer dargestellte Ausgleichsraum (5) über eine Einlaßöffnung (12) und eine mit einer außenliegenden Leitung (26) verbundene Auslaßöffnung (23) an den angrenzenden Behälterinnenraum (3) angeschlossen ist und am Kraftstoffbehälter (1) Entlüftungsleitungen (28, 30) einer Entlüftungsvorrichtung (29) vorgesehen sind, gekennzeichnet durch die Kombination folgender Merkmale :

a) der Kraftstoffbehälter (1) mit dem integrierten Ausgleichsraum (5) ist aus Kunststoff im Blasverfahren hergestellt ;

b) eine obere Begrenzungswand (6) des Ausgleichsraumes (5) und eine obere Kraftstoffbehälterwand (4) des angrenzenden Behälterinnenraumes (3) verlaufen in einer gemeinsamen, etwa horizontal verlaufenden Ebene (A-A), wobei der Ausgleichsraum (5) durch zumindest eine aus der Ebene (A-A) in den Behälterinnenraum gerichtete, V-förmig oder U-förmig ausgebildete Einbuchtung (16) vom angrenzenden Behälterinnenraum (3) abgetrennt ist ;

c) die Höhenerstreckung des Ausgleichsraumes (5) ist durch die Höhe der Einbuchtung (16) definiert ;

d) die sich lediglich außerhalb des Kraftstoffbehälters (1) erstreckende und mit Anschlußstutzen (25, 27) des Kraftstoffbehälters (1) verbundene Leitung (26) sowie Entlüftungsleitungen (28, 30) der Entlüftungsvorrichtung (29) verlaufen unterhalb der horizontalen Ebene (A-A), und zwar versenkt in Einbuchtungen (16, 31, 32) des Kraftstoffbehälters (1).

2. Kraftstoffbehälter nach Anspruch 1, dadurch gekennzeichnet, daß in die Leitung (26) zwischen Auslaßöffnung (23) und Behälterinnenraum (3) ein querschnittsverringerndes Reduzierstück (37) eingesetzt ist.

## Claims

1. A fuel tank (1) for motor vehicles having in an upper region thereof an equalisation chamber (5) formed in one piece with the fuel tank for restricting the level during filling, wherein the equalisation chamber is formed by a chamber open at the bottom and is connected to the adjacent tank inner chamber (3) via an inlet opening (12), and an outlet opening (23) is connected to an outside line (26), ventilation lines (28, 30) of a ventilation device (29) being provided on the fuel tank (1), characterised by the combination of the following features :

a) the fuel tank (1) with the integrated equalisation chamber (5) is made of plastics material by blow moulding ;

b) an upper limiting wall (6) of the equalisation chamber (5) and an upper fuel tank wall (4) of the adjacent tank inner chamber (3) extend in a common plane (A-A) extending substantially horizontally, the equalisation chamber (5) being separated by at least recess (16) formed in the shape of a U or V extending from the plane (A-A) into the tank inner chamber (3) ;

c) the vertical extension of the equalisation chamber is defined by the height of the recess (16) ;

d) the line (26), extending entirely outside the fuel tank (1) and being connected to connecting pieces (25, 27) of the fuel tank (1), and ventilation lines (28, 30) of the ventilation device (29) extend below the horizontal plane (A-A), i. e. are embedded in recesses (16, 31, 32) of the fuel tank (1).

2. A fuel tank according to claim 1, characterised in that a member (37) of reduced cross-section is inserted into the line (26) between the outlet opening (23) and the tank inner chamber (3).

## Revendications

1. Réservoir de carburant (1) pour véhicules automobiles, qui comporte, dans une zone supérieure, un compartiment d'équilibrage (chambre 5), destiné à limiter le remplissage lorsqu'on fait le plein, réalisé d'un seul tenant avec le réservoir de carburant (1), ce compartiment d'équilibrage (5) constitué par une chambre ouverte vers le bas se raccordant, par une ouverture d'admission (12) et une ouverture de sortie (23) reliée à une conduite extérieure (26), au volume intérieur contigu (3) du réservoir, et des conduites d'évacuation d'air (28, 39) d'un dispositif d'évacuation d'air (29) étant prévues sur le réservoir de carburant (1), caractérisé par la combinaison des caractéristiques suivantes :

a) le réservoir de carburant (1), comportant la chambre d'équilibrage (5) intégrée, est en matière plastique et fabriqué par soufflage ;

b) une paroi de limitation supérieure (6) de la chambre d'équilibrage (5) et une paroi de réservoir supérieure (4) du volume intérieur (3) du réservoir de carburant contigu s'étendent dans un plan commun sensiblement horizontal (A-A), la chambre d'équilibrage (5) étant séparée du volume intérieur (3) contigu du réservoir par au moins un renfoncement (16) de conformation en V ou en U, dirigé du plan (A-A) vers le volume intérieur du réservoir ;

c) l'étendue en hauteur de la chambre d'équilibrage (5) est définie par la hauteur du renfoncement (16) ;

d) la conduite (26) s'étendant seulement à l'extérieur du réservoir de carburant (1) et reliée à des tubulures de raccordement (25, 27) du réservoir de carburant (1), ainsi que des conduites d'évacuation d'air (28, 30) du dispositif d'évacuation d'air (29) s'étendent au-dessous du plan horizontal (A-B), et sont en fait encastrées dans des renfoncements (16, 31, 32) du réservoir de carburant (1).

2. Réservoir de carburant selon la revendication 1, caractérisé en ce qu'un réducteur (37) réduisant la section droite est introduit dans la conduite (26), entre l'ouverture de sortie (23) et le volume intérieur (3) du réservoir.

Fig.1

0 133 458

Fig.1

1

Fig.2

Fig.3

Fig.4